# EUROPÄISCHE PATENTSCHRIFT

(11) **EP 0 360 339 B1**
(45) Veröffentlichungstag und Bekanntmachung des Hinweises auf die Patenterteilung: **30.08.1995**
(21) Anmeldenummer: 89202329.2
(22) Anmeldetag: 15.09.1989
(51) Int. Cl.: H04N 5/06

(54) **Schaltungsanordnung zum Aufbereiten eines Synchronsignals**
Circuitry for preparing a synchronizing signal
Dispositif de montage de préparation d'un signal de synchronisation

(30) Priorität: 21.09.1988 DE 3832058
(43) Veröffentlichungstag der Anmeldung: 28.03.1990
(73) Patentinhaber: Philips Patentverwaltung GmbH, 22335 Hamburg (DE); Philips Electronics N.V., 5621 BA Eindhoven (NL)
(72) Erfinder: Peters, Matthias, D-2083 Halstenbek (DE); Onken, Gerd, D-2000 Hamburg 61 (DE)
(74) Vertreter: Peters, Carl Heinrich, Dipl.-Ing.

(56) Entgegenhaltungen:
- US-A- 3 504 115
- PATENT ABSTRACTS OF JAPAN, Band 7, Nr. 229 (E-203)[1374], 12. Oktober 1983;& JP-A-58 119 287
- PATENT ABSTRACTS OF JAPAN, Band 9, Nr. 43 (E-298)[1766], 22. Februar 1985;& JP-A-59 182 695

## Beschreibung

Die Erfindung bezieht sich auf eine Schaltungsanordnung zum Aufbereiten eines Synchronsignals gemäß dem Oberbegriff des unabhängigen Anspruchs.

Ein gebräuchliches Fernsehsignal im Basisband enthält neben dem Leuchtdichte- und dem Farbartsignal ein Synchronsignal zur Synchronisierung des Zeilen- bzw. Bildwechsels. Dieses Synchronsignal besteht aus einzelnen oder zu Gruppen zusammengefaßten, im wesentlichen rechteckförmigen Impulsen, die mit einer im Vergleich zum gesamten Fernsehsignal niedrigen Wiederholfrequenz auftreten. Für bestimmte Anwendungsfälle ist den Impulsen dieses Synchronsignals ein zweites, hochfrequentes Synchronsignal überlagert, das vorzugsweise aus Abschnitten einer sinusförmigen Schwingung mit einer Frequenz besteht, die ein ganzzahliges Vielfaches der Zeilenfrequenz des Fernsehsignals ist. Dieses auch als "Pilot-Burst" bezeichnete zweite Synchronsignal weist eine konstante Phase über die Gesamtdauer des Fernsehsignals auf. Anfangs- und Endzeitpunkte der Abschnitte der Sinusschwingung sind innerhalb der Dauer der Impulse des ersten Synchronsignals festgelegt, die Amplitude der Sinusschwingungen entspricht im wesentlichen der Amplitude der Impulse des ersten Synchronsignals, und die Nullinie der Sinusschwingungen liegt beim Maximum, d.h. beim Amplitudenwert der Impulse des ersten Synchronsignals. Eine Beschreibung dieses "Pilot-Burst" findet sich im IEC-Standard, Publikation 856, 1. Ausgabe, 1986, "Pre-recorded optical reflective video disc system".

Bei der Verarbeitung eines derartigen Fernsehsignals mit Empfangsanordnungen, die beispielsweise für Fernsehsignale der PAL- bzw. der SECAM-Norm ausgebildet sind, ergibt sich die Schwierigkeit, daß das zweite Synchronsignal aufgrund seiner hohen Amplitude als Störung des ersten Synchronsignals detektiert wird, oder daß anstelle eines einzigen Impulses des ersten Synchronsignals fälschlicherweise deren mehrere erkannt werden. In diesen Fällen tritt eine Störung bei der Verarbeitung des Fernsehsignals auf.

Aus der JP-A-58119287 ist eine Erzeugungsschaltung für ein Befehlssignal zum Eliminieren des "Pilot-Burst" bekannt, in der selektiv ein Frequenzanteil aufgenommen wird, der zu einem Synchronimpulsspitzen-Pegel in einem PAL-Farbfernseh-HF-Signal korrespondiert. Dazu wird mit einem Auswahlschalter entweder das empfangene HF-Signal oder dasjenige einer vorausgegangenen Zeile des Fernsehbildes ausgewählt und einem Frequenzdemodulator sowie einer Schaltungsanordnung zur Erzeugung eines Befehlssignals zum Eliminieren des "Pilot-Burst" zugeführt. Die Mittenfrequenz eines schmalen Bandfilters innerhalb der Schaltungsanordnung zur Erzeugung des Befehlssignals stimmt mit der Frequenz überein, die dem Synchronimpulsspitzen-Pegel des Videosignals entspricht, das durch Frequenzdemodulation des HF-Signals erhalten wird. Beim Empfang einer dem Synchronimpulsspitzen-Pegel entsprechenden frequenz wird somit ein Signal höherer Amplitude erhalten, das von einem Signalpegel-Detektionskreis detektiert und aus dem ein Befehlssignal zum Eliminieren des "Pilot-Burst" erzeugt wird. In einem Eliminationsschaltkreis wird der "Pilot-Burst" im Synchronsignal des Videosignals durch das Befehlssignal eliminiert.

Aus der US-A- 3,504 115 ist ein Fernseh-Übertragungs- und -Empfangssystem bekannt. Dieses umfaßt eine Empfangsschaltung für ein Fernsehsignal mit simultaner Tonübertragung, welches ein Synchronsignal enthält, welchem ein hochfrequentes Burst-Signal überlagert ist. Eine Schaltungsanordnung zum Empfangen eines mit einem derartigen Synchronsignal versehenen Fernsehsignals enthält ein Tiefpaßfilter, welchem das Fernsehsignal zugeführt wird und welches an seinem Ausgang eine vom hochfrequenten Signal befreite Sockelkomponente des Burst-Signals abgibt.

Die Erfindung hat die Aufgabe, eine Schaltungsanordnung zu schaffen, durch die die Synchronsignale des Fernsehsignals derart aufbereitet werden, daß eine nachfolgende Signalverarbeitung mit dafür gebräuchlichen Anordnungen ohne Störungen möglich ist.

Diese Aufgabe wird bei eines Schaltungsanordnung der eingangs genannten Art durch die kennzeichnenden Merkmale des unabhängigen Anspruchs gelöst.

Gemäß der Erfindung wird somit im Fernsehsignal das (höherfrequente) Synchronsignal durch das Signal mit konstantem Referenzpegel ersetzt, der vorzugsweise dem Amplitudenwert der (niederfrequenten) Synchronimpulse entspricht. Grundsätzlich wird das Kriterium für das Ersetzen des Synchronsignals bereits durch den ersten Signalverarbeitungszweig geliefert, in dem die Grenzfrequenz derart gewählt ist, daß das zweite Synchronsignal durch ihn unterdrückt wird. Der zusätzliche zweite Signalverarbeitungszweig liefert darüber hinaus ein weiteres zeitliches Kriterium für das Ersetzen des ursprünglichen Fernsehsignals durch das Signal mit dem konstanten Referenzpegel, indem dieses Ersetzen mit der Dauer des zweiten Synchronsignals während eines Synchronimpulses des ersten Synchronsignals verknüpft wird. Durch die Laufzeit des Tiefpasses tritt nämlich eine zeitliche Verzögerung der vom Synchronimpulsdetektor detektierten Signalverläufe des Synchronimpulses, die den Schneidepegel überschreiten, gegenüber dem Synchronimpuls im ursprünglichen Fernsehsignal auf. Diese Verzögerung würde im aufbereiteten Fernsehsignal eine Verschiebung des zeitlichen Abstandes der Rückflanke des (aufbereiteten) Synchronsignals gegenüber dem Bildinhalt des Fernsehsignals bedingen. Dadurch würde eine Verschiebung des gesamten Bildes auf der Bildwiedergabeanordung beim Wiedergeben des aufbereiteten Fernsehsignals hervorgerufen. Dies stört insbesondere in den Fällen, in denen auf der Bildwiedergabeanordnung Fernsehsignale aus verschiedenen Signalquellen wiedergegeben werden sollen.

Bei der erfindungsgemäßen Schaltungsanordnung wird dagegen die Rückflanke des aufbereiteten Synchronsignals zeitlich mit dem Ende des zweiten Synchronsignals innerhalb des Synchronimpulses des ersten Synchronsignals verknüpft, so daß eine feste zeitliche Zuordnung zur Rückflanke des Synchronimpulses ohne die beschriebene Verzögerung erreicht wird. Das derart aufbereitete Fernsehsignal ist somit in jeder Weise normgerecht und kann ohne Gefahr fälschlicherweise detektierter Störungen von den üblichen Fernsehsignalverarbeitungsanordnungen weiterverarbeitet und wiedergegeben werden.

In einer Fortbildung wird der Signalspeicher auch während der Dauer des von der Impulserzeugungsstufe abgegebenen Impulses in der ersten Richtung umgeladen. Der Signalspeicher dient dann sowohl zur Auswertung des Impulses aus dem ersten Signalverarbeitungszweig als auch zur Auswertung des im zweiten Signalzweig erfaßten zweiten Synchronsignals, so daß vorteilhaft die ODER-Verknüpfung, die für die Zeitdauer der Übertragung des Signals mit konstantem Referenzpegel maßgebend ist, in der Umladung des Signalspeichers in der ersten Richtung ausgeführt werden kann. Dadurch wird der Schaltungsaufbau vereinfacht.

Vorteilhaft wird weiter durch eine Dauerladequelle der Signalspeicher fortwährend in einer zweiten, der ersten Richtung entgegengesetzten Richtung umgeladen. Durch diese Dauerladequelle nimmt der Signalspeicher außerhalb der Zeitbereiche, in denen eine Umladung in der ersten Richtung erfolgt, dauerhaft einen der zweiten Richtung entsprechenden zweiten Umladezustand an. Vorzugsweise liefert die Dauerladequelle einen Strom, der betragsmäßig wesentlich geringer ist als vom Halbwellendetektor bzw. von der Impulserzeugungsstufe hervorgerufene Ströme zum Umladen des Signalspeichers. Die letztgenannten Ströme überdecken dann den konstanten Dauerladestrom beim Auftreten der Synchronimpulse.

Ausführungsbeispiele der Erfindung sind in der Zeichnung dargestellt und werden im nachfolgenden näher beschrieben. Es zeigen
Fig. 1 ein erstes Ausführungsbeispiel in blockschematischer Darstellung,
Fig. 2 einige Signalverläufe der Anordnung nach Fig. 1,
Fig. 3 ein zweites Ausführungsbeispiel in detallierterer Darstellung.

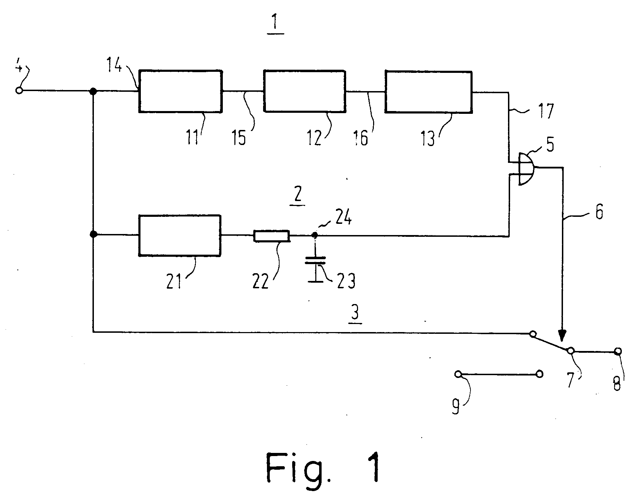

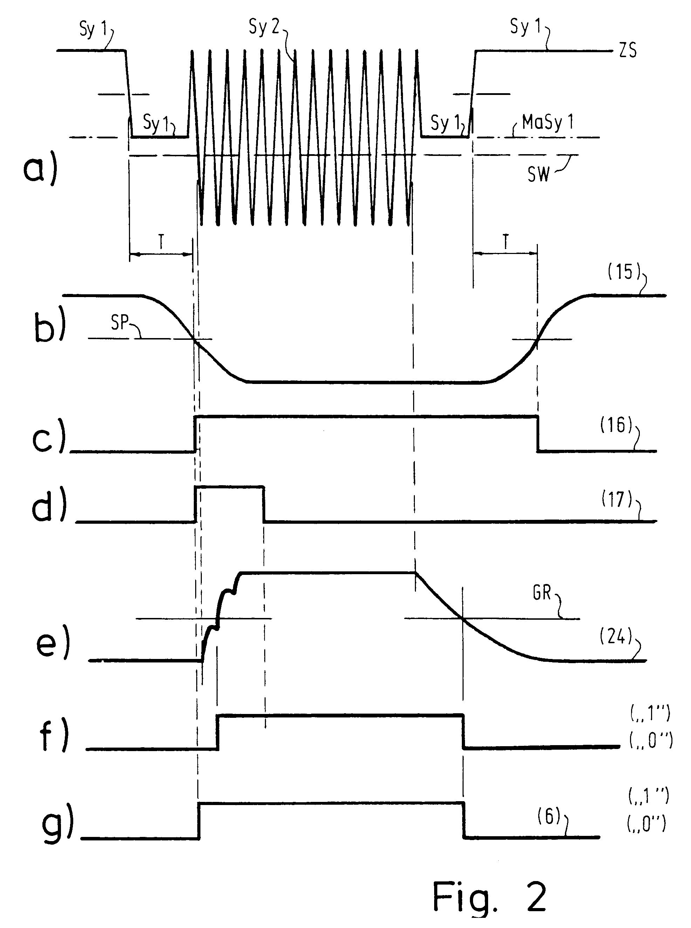

In Fig. 1 umfaßt ein erster Signalzweig 1 einen Tiefpaß 11, einen Synchronimpulsdetektor 12 sowie eine Impulserzeugungsstufe 13. Von einem Fernsehsignaleingang 4 wird dem Tiefpaß 11 an seinem Eingang 14 ein Fernsehsignal zugeführt, das außer Leuchtdichte- und Farbartsignal ein erstes, niederfrequentes Synchronsignal umfaßt, das aus einzelnen Synchronimpulsen für Zeilenwechsel bzw. für Bildwechsel zusammengesetzt ist. Den Synchronimpulsen dieses ersten Synchronsignals ist ein zweites, hochfrequentes Synchronsignal überlagert, das in einem definierten Zeitbereich innerhalb der einzelnen Synchronimpulse des ersten Synchronsignals eine festgelegte Anzahl von Perioden einer sinusförmigen Schwingung aufweist, deren Frequenz ein ganzzahliges Vielfaches der Wiederholfrequenz der Synchronimpulse ist, und das während der übrigen Zeit verschwindet. Die Amplitude des zweiten Synchronsignals entspricht im wesentlichen der Amplitude des ersten Synchronsignals. Das aus dem ersten und dem zweiten Synchronsignal zusammengesetzte Synchronsignal ist in Fig. 2a) dargestellt und mit ZS bezeichnet. Ferner stellen in Fig. 2a) die mit Sy1 bezeichneten Abschnitte des Kurvenverlaufes die Anteile des ersten Synchronsignals im Bereich eines Synchronimpulses und die mit Sy2 bezeichneten Teile des Kurvenverlaufes die überlagerten Schwingungszüge des zweiten Synchronsignals dar.

Das Fernsehsignal und damit auch das zusammengesetzte Synchronsignal ZS werden im Tiefpaß 11 von hochfrequenten Signalanteilen befreit. Die abgetrennten niederfrequenten Signalanteile des Fernsehsignals werden über die Leitung 15 von Tiefpaß 11 dem Synchronimpulsdetektor 12 zugeleitet. Im Bereich der Synchronimpulse des ersten Synchronsignals Sy1 nimmt das Signal auf der Leitung 15 den in Fig. 2b) dargestellten Verlauf an. Aufgrund der Übertragungseigenschaften des Tiefpasses 11 sind darin gegenüber dem ersten Synchronsignal Sy1 nicht nur die Impulsflanken verschliffen, vielmehr ist auch die hochfrequente Schwingung des zweiten Synchronsignals Sy2 unterdrückt. Aufgrund der Signallaufzeit des Tiefpasses 11 tritt der Impuls auf der Leitung 15 gemäß Fig. 2b) gegenüber dem Synchronimpuls aus dem ersten Synchronimpuls Sy1 am Fernsehsignaleingang 4 verzögert auf. Als Maß für diese Verzögerung ist in Fig. 2 die Zeit T eingetragen, die zwischen dem Auftreten des halben Amplitudenwertes im Verlauf der Impulsflanke des ersten Synchronsignals Sy1 einerseits und des Signals auf der Leitung 15 andererseits auftritt. Würde ein solcher Impuls wie in Fig. 2b) unmittelbar als Synchronimpuls für das Fernsehsignal benutzt, entstünde eine Verschiebung des Bildinhalts um die Zeit T bzw. einen dieser Zeit T entsprechenden seitlichen Abstand auf einer Bildwiedergabeanordnung. Daran würde sich auch nichts ändern, wenn, wie in Fig. 2c) dargestellt, der Impuls gemäß Fig. 2b) mit einem Schneidepegel SP verglichen - beispielsweise in einem Komparator - und das Ausgangssignal dieses Komparators als Synchronimpuls verwendet würde. Es würde dann zwar ein Rechteckimpuls gemäß Fig. 2c) entstehen, die Verzögerung um die Zeit T bliebe aber bestehen.

Zur Behebung dieses Nachteils wird das Ausgangssignal des Synchronimpulsdetektors 12, das beispielsweise einen zeitlichen Verlauf gemäß Fig. 2c) aufweist, über die Leitung 16 der Impulserzeugungsstufe 13 zugeführt. Diese erzeugt, beginnend mit der Vorderflanke des Impulses auf der Leitung 16, d.h. mit Detektieren eines Synchronimpulses, einen Impuls, dessen Verlauf in Fig. 2d) dargestellt ist und dessen Dauer kürzer ist als das kürzeste, auftretende zweite Synchronsignal, so daß der Impuls gemäß Fig. 2d) auf jeden Fall nach dem letzten Schwingungszug des zweiten Synchronsignals Sy2 wieder abgeklungen ist. Dieser Impuls wird auf einer Leitung 17 abgegeben.

Grundsätzlich ist es denkbar, die Dauer des Impulses gemäß Fig. 2d) auf der Leitung 17 derart einzustellen, daß sie bis zum Ende des Synchronimpulses des ersten Synchronsignals Sy1 reicht. Die dafür benötigten Bauelemente sind jedoch Toleranzen unterworfen, die eine Einstellung dieser Dauer mit der gewünschten Genauigkeit aufwendig und schwierig gestalten. Selbst bei einer genauen Einstellung der Dauer wäre aber das Ende des Impulses gemäß Fig. 2d) in seiner zeitlichen Lage nicht exakt bestimmbar, da der Beginn dieses Impulses, d.h. die vordere Flanke, zumindest den durch den Tiefpaß 11 vorgegebenen Toleranzen unterworfen ist. Gemäß der Erfindung enthält die Schaltungsanordung daher einen zweiten Signalzweig 2 mit einem Halbwellendetektor 21. Dieser trennt aus dem Fernsehsignal Signalspitzen ab, die die Maxima des ersten Synchronsignals überschreiten. In Fig. 2a) ist ein solches Maximum mit MaSy1 bezeichnet. Es bildet den Impulsboden des Synchronimpulses aus dem ersten Synchronsignal Sy1. Ferner ist in Fig. 2a) ein Schwellenwert SW in geringfügigem Abstand von dem Impulsboden MaSy1 eingezeichnet. Der Halbwellendetektor 21 trennt nun alle Signalspitzen des zweiten Synchronsignals Sy2 ab, die diesen Schwellenwert SW überschreiten - in der Darstellung nach Fig. 2a) nach unten hin, d.h. in Richtung auf noch größere Synchronimpulsamplituden. Durch diese Wahl der einzelnen Pegel und Werte wird erreicht, daß der Halbwellendetektor allein auf das erste Synchronsignal Sy1 oder auch das zweite Synchronsignal Sy2 nicht anspricht, sondern erst auf die Kombination dieser beiden im zusammengesetzten Synchronsignal ZS. Wenn also beispielsweise ein "normgerechtes" Fernsehsignal am Fernsehsignaleingang 4 anliegt, das das zweite Synchronsignal Sy2 nicht enthält, würde der zweite Signalzweig 2 nicht aktiviert werden.

Durch die gemäß dem Schwellenwert SW abgetrennten Signalspitzen des zweiten Synchronsignals Sy2 wird über einen Widerstand 22 eine als Signalspeicher dienende Kapazität 23 in einer ersten Richtung umgeladen, im vorliegenden Fall auf eine höhere Spannung am Verbindungspunkt 24 zwischen dem Widerstand 22 und der Kapazität 23 hin. Diese Umladung erfolgt stoßweise durch jede Signalspitze bis zum Ende des zweiten Synchronsignals Sy2. Nach Ende der Dauer des zweiten Synchronsignals Sy2 entlädt sich die Kapazität 23 wieder zu niedrigen Spannungen am Verbindungspunkt 24 hin, d.h. es erfolgt ein Umladevorgang in einer zweiten Richtung bis zu einem Endwert der Spannung am Verbindungspunkt 24.

Der beschriebene Umladevorgang und der daraus für die Spannung am Verbindungspunkt 24 folgende Signalverlauf ist in Fig. 2e) wiedergegeben. Der Umladestrom für die Kapazität 23 und die Impulsdauer des Impulses auf der Leitung 17 sind dabei zueinander so bemessen, daß die Spannung am Verbindungspunkt 24 ihren Endwert der Umladung in der ersten Richtung - ausgehend vom Endwert der Umladung in der zweiten Richtung - erreicht hat, bevor der Impuls auf der Leitung 17 beendet ist. Dies ist aus dem Vergleich der Fig. 2d) und 2e) ersichtlich.

Die Signale bzw. Spannungen auf der Leitung 17 bzw. am Verbindungspunkt 24 werden durch ein ODER-Gatter 5 verknüpft. Dazu erfolgt durch das ODER-Gatter 5 zunächst eine Wertung der Spannung am Verbindungspunkt 24. Dies geschieht in an sich bekannter Weise z.B. mit einer dem entsprechenden Eingang des ODER-Gatters 5 zugeordneten Schwellenschalters, der alle Spannungswerte von einem Grenzwert GR aus gesehen in der ersten Richtung der Umladung des Signalspeichers 23 als logisches Signal "1" und alle sonstigen Spannungswerte am Verbindungspunkt 24 als logisches Signal "0" bewertet. Der Endzustand der Umladung des Signalspeichers 23 in der zweiten Richtung entspricht demnach der logischen "0". Der Grenzwert GR ist enstprechend in Fig. 2e) eingetragen. Fig. 2f) gibt dann die Bewertung des Spannungsverlaufs am Verbindungspunkt 24 nach logischen Pegeln wieder.

In Fig. 2g) ist schließlich das logische Signal am Ausgang 6 des ODER-Gatters 5 wiedergegeben. Es bildet einen Impuls, dessen vordere Flanke durch den Impuls auf der Leitung 17 und dessen hintere Flanke durch den Umladevorgang des Signalspeichers 23 und den Grenzwert GR bestimmt werden. Insbesondere für die hintere Flanke des Impulses am Ausgang 6 ist damit die Einhaltung enger zeitlicher Toleranzen möglich, da der Zeitpunkt des Auftretens dieser Flanke nur vom Ende des zweiten Synchronsignals Sy2 und von den den Umladevorgang des Signalspeichers in der zweiten Richtung bestimmenden Elementen abhängt. Da dieser Umladevorgang jedoch kurz gegenüber der Gesamtdauer des Synchronimpulses im ersten Synchronsignal Sy1 ist, wirken sich Toleranzen in diesen Bauelementen in bezug auf die Gesamtlage des Synchronimpulses nur untergeordnet aus. Dadurch ist mit einfachen Mitteln eine Impulslage hoher zeitlicher Genauigkeit erreicht. Die genaue zeitliche Zuordnung zwischen der Rückflanke des Impulses am Ausgang 6 und der Rückflanke des Synchronimpulses des ersten Synchronsignals Sy1 gemäß Fig. 2a) kann dabei durch die Dimensionierung der für den Umladevorgang in der zweiten Richtung zuständigen Bauelemente der Schaltungsanordnung gewählt werden.

In Fig. 1 ist ferner ein dritter Signalzweig 3 dargestellt, der über einen Umschalter 7 einen Fernsehsignalausgang 8 wahlweise mit dem Fernsehsignaleingang 4 oder einem Anschluß 9 verbindet, an dem ein künstlicher Synchronimpulspegel anliegt, der wenigstens nahezu mit dem Pegel des ersten Synchronsignalsa Sy1 im Bereich der Impulsböden MaSy1 übereinstimmt. Der Umschalter 7 wird durch das logische Signal am Ausgang 6 der ODER-Gatters 5 betätigt und verbindet immer dann, wenn dieses Signal einer logischen "1" entspricht, den Anschluß 9 mit dem Fernsehsignalausgang 8; in den übrigen Zeitbereichen ist der Fernsehsignaleingang 4 über den Umschalter 7 unmittelbar auf den Fernsehsignalausgang 8 geschaltet. Das zusammengesetzte Synchronsignal ZS wird damit im Bereich eines Synchronimpulses durch ein Signal konstanten Pegels ersetzt.

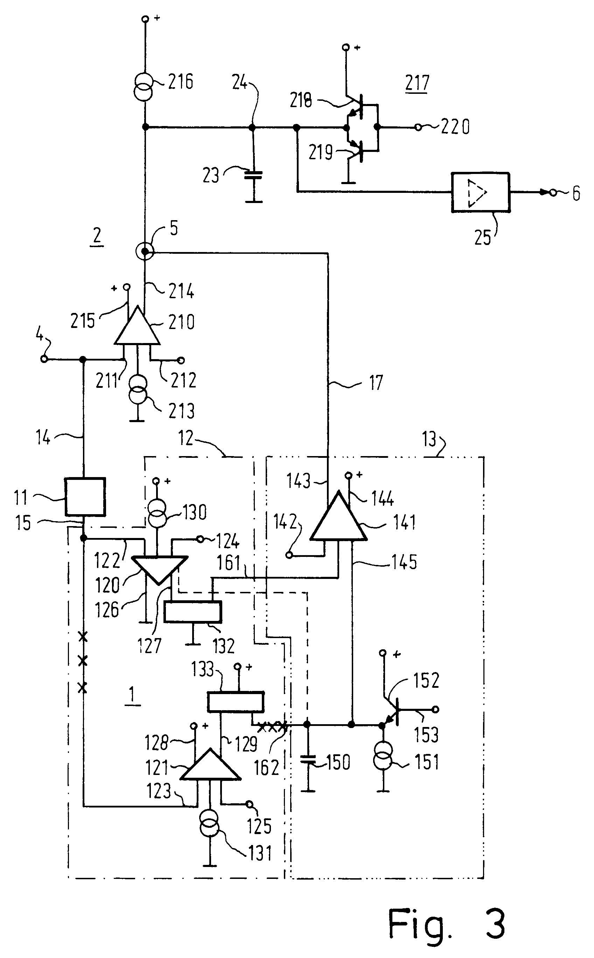

Fig. 3 zeigt eine Abwandlung des ersten und des zweiten Signalzweiges 1 bzw. 2 der Anordnung aus Fig. 1 in etwas detaillierterer Darstellung. Darin sind der Fig. 1 entsprechende Elemente wieder mit denselben Bezugszeichen versehen.

Bei der Anordnung nach Fig. 3 wird das Fernsehsignal vom Fernsehsignaleingang 4 über den Tiefpaß 11 und die Leitung 15 innerhalb des Synchronimpulsdetektors 12 jeweils einem Signaleingang 122 bzw. 123 eines ersten bzw. zweiten Differenzverstärkers 120 bzw. 121 zugeführt. Die Differenzverstärker bilden Signalpegeldetektoren und enthalten in an sich bekannter Weise jeweils ein emittergekoppeltes Paar von Transistoren, von denen jeweils einer mit seinem Basisanschluß einen der Signaleingänge 122 bzw. 123 bildet. Dem jeweils anderen Basisanschluß, der als Referenzsignaleingang 124 bzw. 125 dient, wird eine konstante Spannung zugeführt. Die Kollektoranschlüsse der emittergekoppelten Transistoren sind mit je einem Ausgang 126, 127 bzw. 128, 129 der Differenzverstärker 120 bzw. 121 verbunden. Den gekoppelten Emitteranschlüssen wird über eine Stromquelle 130 bzw. 131 ein konstanter Speisestrom zugeführt.

Den Referenzsignaleingängen 124 und 125 wird übereinstimmend der Schneidepegel für die Detektion der Synchronimpulse zugeführt. Entsprechend fließt in den zweiten Ausgängen 127 bzw. 129 der von der Stromquelle 130 bzw. 131 hervorgerufene Strom, wenn ein Synchronimpuls auftritt; in den übrigen Zeiträumen wird der Strom von der Stromquelle 130 bzw. 131 über die ersten Ausgänge 126 bzw. 128 an einen der Anschlüsse der Energiequelle (Masse oder Plus) abgeleitet.

Der Strom in den zweiten Ausgängen 127 bzw. 129 wird über Stromspiegelanordnungen 132 bzw. 133 in an sich bekannter Weise gespiegelt und tritt an Ausgängen 161 bzw. 162 des Synchronimpulsdetektors 12 auf.

Dem Synchronimpulsdetektor 12 ist in der Schaltungsanordnung nach Fig. 3 die Impulserzeugungsstufe 13 nachgeschaltet, die einen dritten Differenzverstärker 141 umfaßt, der entsprechend dem ersten und dem zweiten Differenzverstärker 120, 121 aufgebaut ist. Insbesondere wird seinem Referenzsignaleingang 142 der Schneidepegel zugeführt, der auch den Referenzsignaleingängen 124, 125 zugeleitet wird. Ein Ausgang 143 ist mit der Leitung 17, ein zweiter Ausgang 144 mit dem positiven Anschluß der Energiequelle verbunden. Den gekoppelten Emitteranschlüssen des dritten Differenzverstärkers 141 wird über den ersten Ausgang 161 der Strom von der Stromspiegelanordnung 132 im Synchronimpulsdetektor 12 zugeführt.

Der zweite Ausgang 162 des Synchronimpulsdetektors 12 ist in der Impulserzeugungsstufe 13 mit einem Kondensator 150 verbunden, der mit seinem zweiten Anschluß an Masse liegt. Außerdem ist die Verbindung zwischen dem Ausgang 162 und dem Kondensator 150 an einen Signaleingang 145 des dritten Differenzverstärkers 141 geführt.

Vor Auftreten eines Synchronimpulses im ersten Synchronsignal Sy1 fließt weder am ersten noch am zweiten Ausgang 161 bzw. 162 des Synchronimpulsdetektors 12 ein Strom. Demzufolge verharrt der Kondensator 150 in einem Ladezustand, dem durch eine Entladestromquelle 151 und einen Abfangtransistor 152 ein bestimmter Spannungspegel zugeordnet ist. Dazu ist der Hauptstrompfad des Abfangtransistors 152 mit der Entladestromquelle 151 in Reihe und diese Reihenschaltung zwischen die Anschlüsse der Energiequelle geschaltet. Der Basisanschluß 153 des Abfangtransistors 152 liegt an einer konstanten Referenzspannung; der Verbindungspunkt zwischen dem Abfangtransistor 152 und der Entladestromquelle 151 ist mit dem Kondensator 150 verbunden. Sinkt die Spannung am Kondensator 150 durch den Strom der Entladestromquelle 151 unter den durch die Referenzspannung am Basisanschluß 153 und die Basis-Emitter-Flußspannung des Abfangtransistors 152 vorgegebenen Wert, wird der Strom der Entladestromquelle 151 vom Abfangtransistors 152 aufgenommen und belastet den Kondensator 150 nicht mehr. Der Abfangtransistor 152 wirkt somit wie eine zwischen den Kondensator 150 und die dem Basisanschluß 153 zugeführte Referenzspannung geschaltete Diode mit dem Vorteil, daß die Referenzspannung durch den Entladestrom nicht belastet wird.

Beim Auftreten des Synchronimpulses fließt über den zweiten Ausgang 162 des Synchronimpulsdetektors 12 ein den Entladestrom der Entladestromquelle 151 um einen bestimmten Betrag übersteigender Strom, der vorzugsweise nur geringfügig größer ist als der Entladestrom und den Kondensator 150 zu höheren Spannungen hin auflädt. Überschreitet die Spannung am Kondensator 150, die dem dritten Differenzverstärker am Signaleingang 145 zugeleitet wird, den Schneidepegel am Referenzsignaleingang 142, wird der Strom vom ersten Ausgang 161 des Synchronimpulsdetektors 12 zum ersten Ausgang 143 des dritten Differenzverstärkers 141 und damit zur Leitung 17 auf den zweiten Ausgang 144 umgeschaltet und somit von der Energiequelle aufgenommen. Die Leitung 17 ist dann stromlos. Insgesamt entsteht so während des ersten Teil jedes Synchronimpulses auf der Leitung 17 ein Stromimpuls, dessen Verlauf dem des in Fig. 2d) gezeigten Impulses entspricht.

Der zweite Signalzweig 2 wird bei der Anordnung nach Fig. 3 durch einen vierten Differenzverstärker 210 gebildet, der wie die bisher beschriebenen Differenzverstärker aufgebaut und dessen Signaleingang 211 mit dem Fernsehsignaleingang 4 verbunden ist. Seinem Referenzsignaleingang 212 wird der Schwellenwert SW zum Detektieren der den Impulsboden des Synchronimpulses überschreitenden Halbwellen des zweiten Synchronsignals Sy2 zugeleitet. Entsprechend fließt ein den gekoppelten Emitteranschlüssen des vierten Differenzverstärkers 210 von einer Stromquelle 213 zugeführter Strom beim Auftreten der den Schwellenwert überschreitenden Halbwellen des zweiten Synchronsignals Sy2 über einen ersten Ausgang 214, wohingegen er in den übrigen Zeitbereichen über einen zweiten Ausgang 215 an den Pluspol der Energiequelle abgeführt wird. Der vierte Differenzverstärker 210 bildet somit den Halbwellendetektor 221.

In Abweichung von der Anordnung nach Fig. 1 wird jedoch bei der vorliegenden Schaltung der Strom vom ersten Ausgang 214 des vierten Differenzverstärkers 210, d.h. des Halbwellendetektors 21, nicht unmittelbar und ausschließlich dem Signalspeicher 23 zugeführt, sondern zunächst über eine ODER-Verknüpfung mit dem Strom auf der Leitung 17 auf dem ersten Signalzweig verknüpft. Das ODER-Gatter 5 wird dabei in sehr einfacher Weise als sogenanntes "verdrahtetes Oder", d.h. durch einen einfachen Leitungsknoten ausgeführt. Auf die als Signalspeicher dienende Kapazität 23 wirkt dann die Kombination der Ströme vom ersten Ausgang 214 und der Leitung 17, so daß der Signalspeicher 23 auch während der Dauer des Impulses von der Leitung 17 in der ersten Richtung umgeladen, d.h. zu niedrigen Spannungen am Verbindungspunkt 24 hin entladen wird. Die beiden Ströme sind dazu in der gleichen Größenordnung dimensioniert.

Mit dem Verbindungspunkt 24 ist außerdem eine gegen den Pluspol der Energiequelle geschaltete Dauerladequelle 216 verbunden, die die Kapazität 23 durchgehend mit einem konstanten Dauerladestrom versorgt. Das Verhältnis zwischen dem Strom am ersten Ausgang 214 des vierten Differenzverstärkers 210, dem Dauerladestrom der Dauerladequelle 216 und dem Wert der Kapazität 23 ist entscheidend für Lage und Dauer der Impulse im aufbereiteten Synchronsignal, so daß die Bemessung dieser Parameter exakt ausgeführt werden muß. Dies ist jedoch in einfacher Weise durch die Einstellung des Verhältnisses der beiden Ströme zueinander und des Absolutwertes der Ströme im Verhältnis zu der Kapazität möglich und auch bei einem Aufbau der Anordnung als integrierter Schaltkreis auf einem Halbleiterkristall ohne Schwierigkeiten erreichbar.

Die Spannung am Verbindungspunkt 24 wird über eine Impulsformstufe 25, die die kontinuierlichen Spannungsübergänge an der Kapazität 23 in steilere Impulsflanken umwandelt, dem Ausgang 6 zugeführt.

Der Verbindungspunkt 24 ist außerdem mit einer Spannungsbegrenzungsschaltung 217 verbunden. Diese besteht aus der Reihenschaltung zweier Abfangtransistoren 218, 219, die zwischen die Anschlüsse der Energiequelle geschaltet ist. Die miteinander verbundenen Basisanschlüsse der Abfangtransistoren 218, 219 sind mit einer Referenzspannung 220 verbunden; so daß die dem Verbindungspunkt der Emitteranschlüsse der Abfangtransistoren 218, 219 zugeführte Spannung an der Kapazität 23 nur in einem Spannungsbereich variieren kann, der zwei Basis-Emitter-Flußspannungen der Abfangtransistoren 218 bzw. 219 entspricht. Die Umladung des Signalspeichers 23 erfolgt daher stets von definierten Spannungspegeln aus. Der Vollständigkeit halber sei erwähnt, daß die Umladung in Fig. 3 gegenüber derjenigen nach Fig. 2e) gerade mit umgekehrter Polarität erfolgt.

Die erfindungsgemäße Schaltungsanordnung, insbesondere auch gemäß dem Ausführungsbeispiel nach Fig. 3, eignet sich bevorzugt zu einer völligen Integration auf einem Halbleiterkristall, da die Kapazitätswerte für den Signalspeicher 23 und den Kondensator 150 sehr gering gehalten werden können. Durch die Integration ergibt sich außerdem die Möglichkeit einer engen Korrelation zwischen den Strömen der einzelnen Stromquellen und den Toleranzen der übrigen Bauelemente, wodurch insgesamt eine sehr genaue Arbeitsweise der Schaltung erreicht wird.

Die beschriebenen Schaltungsanordnungen eignen sich ohne externe Steuerung gleichermaßen für eine Verarbeitung eines Fernsehsignals mit zweitem Synchronsignal Sy2 oder auch ohne dasselbe. Wenn das zweite Synchronsignal Sy2 nicht auftritt, die Synchronimpulse somit einen konstanten Impulsboden aufweisen, ist der Halbwellendetektor 21 bzw. der vierte Differenzverstärker 210 durchgehend wirkungslos und beeinflußt die Umladung der Kapazität 23 nicht. Damit wird der Umschalter 7 über den Ausgang 6 nach Beendigung des Impulses von der Impulserzeugungsstufe 13 auf der Leitung 17 vom Anschluß 9 auf den Fernsehsignaleingang 4 zurückgeschaltet. Da jedoch auf beiden Anschlüssen während des Synchronimpulses konstante Pegel anliegen, entsteht am Fernsehsignalausgang 8 ein auf bereitetes Synchronsignal mit der gleichen Eigenschaft, das also in gewohnter Weise verarbeitet werden kann.

## Patentansprüche

1. Schaltungsanordnung zum Aufbereiten eines ersten, niederfrequenten Synchronsignals (Sy1), dem ein zweites, hochfrequentes Synchronsignal (Sy2) überlagert ist, in einem Fernsehsignal, mit einem ersten Signalverarbeitungszweig (1), der einen Tiefpaß (11) zum Abtrennen niederfrequenter Anteile und damit des ersten Synchronsignals (Sy1) aus dem Fernsehsignal umfaßt,
dadurch gekennzeichnet, daß der erste Signalverarbeitungszweig weiterhin einen Synchronimpulsdetektor (12) zum Detektieren von einen Schneidepegel (SP) überschreitenden Signalverläufen in den niederfrequenten Anteilen sowie eine Impulserzeugungsstufe (13) zum Erzeugen eines Impulses beim Detektieren eines solchen, einem Synchronimpuls des ersten Synchronsignals (Sy1) entsprechenden Signalverlaufs umfaßt, wobei der Impuls eine kürzere Dauer aufweist als das zweite Synchronsignal (Sy2) in seiner kürzesten Ausbildung, ferner gekennzeichnet durch einen zweiten Signalverarbeitungszweig (2) mit einem Halbwellendetektor (21) zum Abtrennen von Signalspitzen, die die Maxima (MaSy1) des ersten Synchronsignals (Sy1) überschreiten, aus dem Fernsehsignal, und zum Umladen eines Signalspeichers (23) in einer ersten Richtung während eines der Dauer des zweiten Synchronsignals (Sy2) entsprechenden Zeitbereichs, in dem die Signalspitzen auftreten, wobei der Signalspeicher (23) während der übrigen Zeit in einer zweiten Richtung umgeladen wird, sowie einem dritten Signalverarbeitungszweig (3), in dem während eines Zeitintervalls, in dem entweder im ersten Signalverarbeitungszweig (1) ein Impuls abgegeben oder der Signalspeicher (23) in der ersten Richtung umgeladen ist, ein Signal mit konstantem Referenzpegel und während der übrigen Zeit das Fernsehsignal übertragbar ist.

2. Schaltungsanordnung nach Anspruch 1,
dadurch gekennzeichnet, daß der Signalspeicher (23) auch während der Dauer des von der Impulserzeugungsstufe (13) abgegebenen Impulses in der ersten Richtung umgeladen wird.

3. Schaltungsanordnung nach Anspruch 1 oder 2,
gekennzeichnet durch eine Dauerladequelle (216) zum fortwährenden Umladen des Signalspeichers (23) in einer zweiten, der ersten Richtung entgegengesetzten Richtung.

4. Schaltungsanordnung nach Anspruch 1, 2 oder 3,
gekennzeichnet durch eine völlig in einem Halbleiterkristall integrierte Bauform.

## Claims

1. A circuit arrangement for processing, in a television signal, a first, low-frequency synchronizing signal (Sy1) which a second, high-frequency synchronizing signal (Sy2) is superposed, comprising a first signal processing branch (1) which comprises a low-pass filter (11) for separating low-frequency components and consequently the first synchronizing signal (Sy1) from the television signal, characterized in that the first signal processing branch further includes a synchronizing pulse detector (12) for detecting signal waveforms exceeding a cut-off level (SP) in the low-frequency components, and also a pulse generating stage (13) for producing a pulse when such a signal waveform corresponding to the first synchronizing pulse is detected, the pulse being of a duration shorter than the shortest second synchronizing signal (Sy2), a second signal processing branch (2) having a halfwave detector (21) for separating signal peaks exceeding maximum values (MaSy1) of the first synchronizing signal (Sy1), from the television signal, and for charging a signal store (23) in a first direction during a time interval corresponding to the period of the second synchronizing signal (Sy2) in which the signal peaks occur, while the signal store (23) is charged in a second direction during the rest of the time, and also a third signal processing branch (31) in which during a time interval in which either a pulse is supplied in the first signal processing stage (1) or the signal store (23) is charged in the first direction, a signal having a constant reference level can be transmitted and the television signal can be transmitted in the remaining period of time.

2. A circuit arrangement as claimed in Claim 1, characterized in that the signal store (23) is also charged in the first direction during the period of the pulse supplied by the pulse generating stage (13).

3. A circuit arrangement as claimed in Claim 1 or 2, characterized by a continuous charging source (216) for continuously charging the signal store (23) in a second direction opposite to the first direction.

4. A circuit arrangement as claimed in Claim 1, 2 or 3, characterized by a model which is fully integrated in a semiconductor crystal.

## Revendications

1. Montage en circuit de préparation d'un premier signal de synchronisation Sy1 de basse fréquence auquel est superposé un deuxième signal de synchronisation Sy2 de haute fréquence dans un signal de télévision avec une première branche de traitement du signal (1), qui comprend un filtre passe-bas (11) en vue de la séparation des composantes à basse fréquence et dès lors du premier signal de synchronisation (Sy1) du signal de télévision, caractérisé en ce que la première branche de traitement du signal comprend, par ailleurs, un détecteur d'impulsions de synchronisation (12) en vue de la détection de tracés de signaux dépassant un niveau de répartition (SP) dans les composantes à basse fréquence ainsi qu'un niveau générateur d'impulsions (13) en vue de la production d'une impulsion lors de la détection d'un tel tracé de signal correspondant à une impulsion de synchronisation du premier signal de synchronisation (Sy1), l'impulsion présentant une durée inférieure au deuxième signal de synchronisation (Sy2) dans sa conception la plus courte, caractérisé, par ailleurs, par une deuxième branche de traitement de signal (2) avec un détecteur demi-onde (21) en vue de la séparation de pointes de signaux qui dépassent les maxima (MaSy1) du premier signal de synchronisation (Sy1) à partir du signal de télévision, et en vue de l'échange de charge d'une mémoire de signal (23) dans une première direction pendant un intervalle de temps comprenant les pointes de signal et correspondant à la durée du deuxième signal de synchronisation (Sy2), la mémoire de signal (23) étant rechargée pendant le reste du temps dans une deuxième direction, ainsi qu'une troisième branche de traitement du signal (3) dans laquelle, pendant un intervalle de temps au cours duquel une impulsion est émise dans la première branche de traitement du signal (1) ou la mémoire de signal (23) est rechargée dans la première direction, un signal à niveau de référence constant et, pendant le reste du temps, le signal de télévision peuvent être transmis.

2. Montage en circuit selon la revendication 1, caractérisé en ce que la mémoire de signal (23) est également rechargée dans la première direction pendant la durée de l'impulsion émise par le niveau générateur d'impulsions (13).

3. Montage en circuit selon la revendication 1 ou 2, caractérisé par une source de charge permanente (216) en vue d'un échange de charge continu de la mémoire de signal (23) dans une deuxième direction opposée à la première.

4. Montage en circuit selon la revendication 1, 2 ou 3, caractérisé par une conception complètement intégrée dans un cristal à semi-conducteurs.
